# FASCICULE DE BREVET EUROPEEN

(11) **EP 0 521 753 B1**
(45) Date de publication et mention de la délivrance du brevet: **08.03.1995**
(21) Numéro de dépôt: 92401761.9
(22) Date de dépôt: 24.06.1992
(51) Int. Cl.: G01B 13/10, G01B 13/00

(54) **Dispositif de mesure dimensionelle par voie pneumatique**
Vorrichtung zur dimensionalen Messung auf pneumatischem Weg
Apparatus for dimensional measurement by pneumatic means

(30) Priorité: 26.06.1991 FR 9107877
(43) Date de publication de la demande: 07.01.1993
(73) Titulaire: SOCIETE INDUSTRIELLE DE LIAISONS ELECTRIQUES - SILEC, F-75008 Paris (FR)
(72) Inventeur: Razafimandimby, André, c/o Ateliers de Normandie, F-14401 Bayeux (FR); Decool, François, F-14400 Bayeux (FR)
(74) Mandataire: Fruchard, Guy

(56) Documents cités:
- US-A- 4 088 009
- PATENT ABSTRACTS OF JAPAN vol. 11, no. 5 (P-533)(2452) 8 Janvier 1987 & JP-A-61 184 410
- PATENT ABSTRACTS OF JAPAN vol. 6, no. 258 (P-163)(1136) 17 Décembre 1982 & JP-A-57 153207

## Description

La présente invention concerne un dispositif de mesure dimensionnelle par voie pneumatique.

On connait des dispositifs de mesure dimensionnelle par voie pneumatique (par exemple US-A-4 088 009), comportant une source de gaz sous pression, une branche de mesure reliée à la source de gaz sous pression et comprenant un gicleur d'alimentation et un organe de mesure, et un capteur de pression associé à la branche de mesure entre le gicleur d'alimentation et l'organe de mesure pour délivrer un signal électrique. La pression relevée par le capteur de pression est représentative de la distance entre l'objet à mesurer et l'organe de mesure. Malheureusement la pression relevée par le capteur de pression dépend également de la pression d'alimentation de la source de gaz de sorte que les variations de cette pression faussent la mesure. Pour compenser les variations de pression de la source de gaz on a réalisé des dispositifs comportant en plus une branche de référence comprenant un gicleur d'admission et une fuite calibrée, un capteur de pression différentiel étant relié à la branche de mesure et à la branche de référence.

L'intérêt d'effectuer la mesure par un capteur de pression différentiel disposé entre une branche de référence et une branche de mesure est de diminuer les conséquences des variations de la pression d'alimentation. La mesuré est effectuée en étalonnant tout d'abord l'appareil, c'est-à-dire en réglant d'une part la section de la fuite de la branche de référence pour que la pression différentielle soit nulle lorsqu'un étalon ayant des dimensions exactement égales à la cote recherchée pour les pièces à vérifier est placé en regard de l'organe de mesure, et d'autre part le zéro du dispositif électronique associé. Lorsqu'une pièce à contrôler est introduite dans le dispositif de mesure, ta pression différentielle mesurée par le capteur de pression différentiel est proportionnelle à l'écart de cote entre la pièce à contrôler et l'étalon.

Lorsque la pression d'alimentation du dispositif varie, les pressions dans la branche de mesure et dans la branche de référence évoluent dans le même sens de sorte que leur différence introduit une compensation des variations de la pression d'alimentation. Toutefois, cette compensation est partielle seulement et l'erreur relative commise sur l'écart de cote est proportionnel à la variation relative de la pression absolue d'alimentation. Cette compensation agit donc d'autant moins que la pression de mesure est plus éloignée de la pression initiale dans la branche de référence. En pratique celà signifie que plus la pièce à contrôler présente un écart important par rapport à la cote requise, plus la mesure est sensible à des écarts de la pression d'alimentation. Ceci constitue un inconvénient majeur car c'est précisément au moment où l'on approche de la limite d'écart toléré sur une pièce qu'il serait souhaitable d'avoir la plus grande précision pour déterminer si la pièce peut être conservée ou doit être rejetée.

Par ailleurs, on sait que la tension délivrée à la sortie du capteur de pression est proportionnelle à la pression d'alimentation du dispositif. On a donc envisagé de diviser électroniquement le signal de sortie du transducteur de mesure par un signal représentatif de la pression absolue d'alimentation en générant ce signal par un capteur de pression associé à un manomètre mesurant la pression absolue d'alimentation à l'entrée du dispositif. Toutefois, la division électronique d'un signal par un autre signal est une opération complexe à réaliser et d'une fiabilité douteuse.

On a également constaté que la tension à la sortie du capteur de pression était proportionnelle à la tension d'alimentation du capteur de pression lui-même. Une solution idéale pour rendre la mesure indépendante de la pression d'alimentation consisterait donc à rendre constant le produit de la tension d'alimentation du capteur de pression par la pression d'alimentation du dispositif. Cette équation dont la courbe représentative est une hyperbole dans un diagramme associant la tension d'alimentation du capteur de pression à la pression d'alimentation du dispositif pourrait être satisfaite en faisant varier la tension d'alimentation du capteur de pression de façon inversement proportionnelle à la pression d'alimentation du dispositif de mesure. Ceci équivaudrait toutefois à effectuer une division électronique avec les problèmes qui ont été rappelés ci-dessus.

Un but de la présente invention est donc d'effectuer une correction des variations de la pression d'alimentation en remplaçant l'hyperbole précitée par une courbe approchante facile à réaliser électroniquement.

En vue de la réalisation de ce but, on propose selon l'invention un dispositif de mesure dimensionnelle par voie pneumatique comportant une source de gaz sous pression, une branche de mesure reliée à la source de gaz sous pression et comportant un gicleur d'alimentation et un organe de mesure, un capteur de pression de mesure relié à la branche de mesure entre le gicleur d'alimentation et l'organe de mesure, et un capteur de pression absolue relié à la source de gaz sous pression et ayant une entrée reliée à une source d'alimentation électrique de référence et une sortie reliée à une entrée d'un amplificateur différentiel ayant une autre entrée reliée à la source d'alimentation électrique de référence et une sortie reliée à une borne d'alimentation du capteur de pression de mesure.

Ainsi, on fait varier la tension d'alimentation du capteur de pression de mesure de façon linéaire en fonction de la pression de l'alimentation du dispositif de mesure et l'erreur résiduelle relative varie donc comme le carré de la variation relative de la pression absolue d'alimentation.

Selon une version avantageuse de l'invention, le dispositif comporte en outre une branche de référence reliée à la source de gaz sous pression et comprenant un gicleur d'alimentation et une fuite calibrée, et le capteur de pression de mesure est un capteur de pression différentiel relié à la branche de mesure et à la branche de référence.

Selon un autre aspect avantageux de l'invention, le dispositif comporte un circuit correcteur complémentaire disposé sur une ligne de liaison entre la sortie de l'amplificateur différentiel et l'entrée du capteur de pression de mesure, ce circuit correcteur complémentaire comprenant une résistance montée sur la ligne de liaison et une résistance montée en parallèle associée à une référence de tension de calage. Ainsi, on réalise une approximation de l'hyperbole par deux droites réunies par un arc de courbe de sorte que l'on augmente la précision de la correction effectuée.

Selon encore un autre aspect avantageux de l'invention, le dispositif comporte un circuit de sécurité comprenant un interrupteur associé au capteur de pression de mesure et commandé par un amplificateur différentiel ayant une entrée reliée au capteur de pression absolue et une entrée reliée à une tension de référence de sécurité. Ainsi, lorsque la pression d'alimentation tombe en-dessous d'un seuil déterminé par la tension de référence de sécurité, le fonctionnement du dispositif de mesure est interrompu.

D'autres caractéristiques et avantages de l'invention apparaîtront encore à la lecture de la description qui suit d'un mode de réalisation particulier non limitatif de l'invention en liaison avec les figures ci-jointes parmi lesquelles :
- la figure 1 est un diagramme schématique illustrant le mode de réalisation de l'invention avec un circuit correcteur complémentaire,
- la figure 2 est un graphe illustrant l'approximation qui est faite avec le dispositif selon l'invention sans circuit correcteur complémentaire,
- la figure 3 est un graphe illustrant l'approximation qui est faite avec le dispositif selon l'invention avec un circuit correcteur complémentaire.

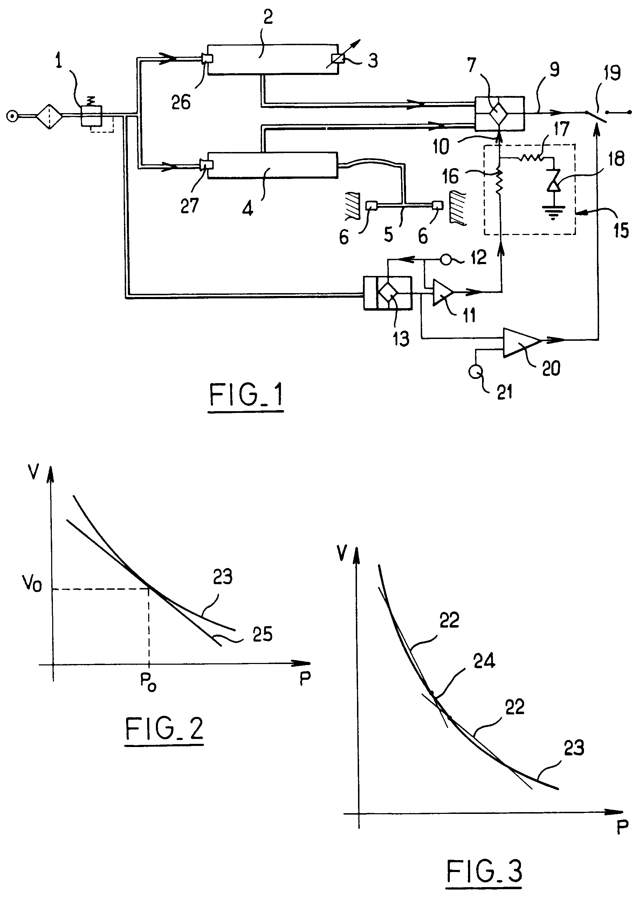

En référence à la figure 1, le dispositif de mesure selon l'invention comporte une source de gaz sous pression formée par un détendeur 1 associé à une canalisation d'alimentation de gaz sous pression, une branche de référence 2 reliée à la source de gaz sous pression et comportant un gicleur d'alimentation 26 et une fuite calibrée 3 de section réglable, une branche de mesure 4 reliée à la source de gaz sous pression en parallèle à la branche de référence 2 et comportant un gicleur d'alimentation 27 et un organe de mesure 5. Dans l'exemple de réalisation illustré, l'organe de mesure 5 comporte deux buses de mesure 6 diamètralement opposées. La branche de référence 2 et la branche de mesure 4 sont reliées à un capteur de pression de mesure différentiel 7 ayant une ligne de sortie 9 délivrant un signal électrique de mesure en fonction de la valeur de la pression différentielle à l'entrée pneumatique du capteur de pression de mesure 7 et d'une tension d'alimentation V amenée au capteur de pression de mesure 7 par une ligne de liaison 10 reliée à la sortie d'un amplificateur différentiel 11 ayant une entrée reliée à une source d'alimentation électrique de référence 12 et une entrée reliée à la sortie d'un capteur de pression absolue 13 relié à la source de gaz sous pression 1.

Un circuit correcteur complémentaire généralement désigné en 15 est disposé sur la ligne de liaison 10 entre la sortie de l'amplificateur différentiel 11 et l'entrée du capteur de pression de mesure 7. Ce circuit correcteur 15 comporte une résistance 16 montée sur la ligne de liaison 10 et une résistance 17 montée en parallèle et associée à une référence de tension de calage 18 formée ici par une diode Zener.

Par ailleurs, le dispositif illustré comporte un circuit de sécurité comprenant un interrupteur 19 monté sur la ligne de sortie du capteur de pression de mesure 7 et commandé par un amplificateur différentiel 20 ayant une entrée reliée au capteur de pression absolue 13 et une entrée reliée à une tension de référence de sécurité 21.

Le dispositif de mesure selon l'invention fonctionne de la façon suivante : lorsque la pression d'alimentation est nulle ou trop faible, la pression atmosphérique ou une pression voisine de la pression atmosphérique règne dans la branche de référence 2 et la branche de mesure 4 de sorte que la pression différentielle mesurée est quasiment nulle même si l'organe de mesure 5 est disposé en regard d'une pièce ayant une cote manifestement erronée. Il est alors souhaitable que le dispositif de mesure soit mis hors service. Cette mise hors service est assurée par l'amplificateur différentiel 20 qui commande une ouverture de l'interrupteur 19. Lorsque la pression d'alimentation est supérieure à un seuil donné par la tension de référence de sécurité 21, le capteur de pression 13 transmet à l'amplificateur différentiel 20 un signal suffisamment élevé pour provoquer la fermeture de l'interrupteur 19. Le capteur de pression de mesure différentiel 7 assure alors sa fonction habituelle de mesure. Dans le cas d'une variation de la pression d'alimentation, le capteur de pression absolue 13 envoie des signaux qui sont traités par l'amplificateur différentiel 11 et le circuit correcteur complémentaire 15 de sorte que la tension d'alimentation du capteur de pression de mesure 7 varie selon des équations qui sont représentées sur la figure 3 par les droites 22 réunies par un tronçon de courbe 24. Les droites 22 et le tronçon de courbe 24 constituent une approximation de l'hyperbole 23 qui est représentative d'une constance du produit de la tension d'alimentation du capteur de pression de mesure 7 par la pression d'alimentation du dispositif.

Un dispositif moins onéreux est obtenu en supprimant le circuit correcteur complémentaire 15 et la tension d'alimentation du capteur de pression de mesure 7 varie alors de façon linéaire en fonction de la pression d'alimentation comme représenté par la droite 25 sur la figure 2. Pour la pression initiale Po du dispositif d'alimentation au moment du calage sur la pièce étalon, la tension d'alimentation initiale du capteur de pression de mesure 7 a une valeur Vo dont le point représentatif sur la figure 2 correspond au point de tangence de la droite 25 avec l'hyperbole 23.

Bien entendu l'invention n'est pas limitée au mode de réalisation décrit et on peut y apporter des variantes de réalisation sans sortir du cadre de l'invention. En particulier, la diode Zener 18 du circuit correcteur peut être remplacée par une autre référence de tension de calage, cette référence de tension de calage déterminant en liaison avec les valeurs des résistances 16 et 17 la position des droites 22 par rapport à l'hyperbole 23.

On peut également disposer l'interrupteur du circuit de sécurité 19 sur la ligne d'alimentation du capteur de pression de mesure 7, celui-ci ne pouvant délivrer aucun signal s'il n'est pas alimenté. On peut également prévoir de relier une entrée de l'amplificateur différentiel 20 à la sortie de l'amplificateur différentiel 11 ou en tout autre point du circuit représentatif du signal délivré par le capteur de pression absolue 13.

Bien que le dispositif selon l'invention ait été représenté dans le mode de réalisation préféré avec un capteur de pression de mesure différentiel disposé entre la branche de référence et la branche de mesure, on obtient un dispositif plus économique et donnant néanmoins de bons résultats en supprimant la branche de référence et en utilisant un capteur de pression de mesure simple relié uniquement à la branche de mesure. Le signal fourni par le capteur de pression de mesure 7 est alors directement représentatif de la cote de la pièce mesurée.

## Revendications

1. Dispositif de mesure dimensionnelle par voie pneumatique comportant une source de gaz sous pression (1), une branche de mesure (4) reliée à la source de gaz sous pression et comprenant un gicleur d'alimentation (27) et un organe de mesure (5), et un capteur de pression de mesure (7) relié à la branche de mesure entre le gicleur d'alimentation (27) et l'organe de mesure (5), caractérisé en ce qu'il comporte un capteur de pression absolue (13) relié à la source de gaz sous pression (1) et ayant une entrée reliée à une source d'alimentation électrique de référence (12) et une sortie reliée à une entrée d'un amplificateur différentiel (11) ayant une autre entrée reliée à la source d'alimentation électrique de référence et une sortie reliée à une borne d'alimentation du capteur de pression de mesure (7).

2. Dispositif selon la revendication 1 caractérisé en ce qu'il comporte en outre une branche de référence reliée à la source de gaz sous pression et comprenant un gicleur d'alimentation (26) et une fuite calibrée (3), et en ce que le capteur de pression de mesure (7) est un capteur de pression différentiel relié à la branche de mesure et à la branche de référence.

3. Dispositif de mesure pneumatique selon la revendication 1 ou la revendication 2 caractérisé en ce qu'il comporte un circuit correcteur complémentaire (15) disposé sur une ligne de liaison (10) entre la sortie de l'amplificateur différentiel (11) et l'entrée du capteur de pression de mesure (7), ce circuit correcteur complémentaire comprenant une résistance (16) montée sur la ligne de liaison (10) et une résistance (17) montée en parallèle associée à une source de tension de calage (18).

4. Dispositif de mesure pneumatique selon l'une des revendications 1 à 3, caractérisé en ce qu'il comporte un circuit de sécurité comprenant un interrupteur (19) associé au capteur de pression de mesure (7) et commandé par un amplificateur différentiel (20) ayant une entrée reliée au capteur de pression absolue (13) et une entrée reliée à une tension de référence de sécurité (21).

## Claims

1. A device for measuring a dimension by pneumatic means, the device comprising a source (1) of gas under pressure, a measurement branch (4) connected to the source of gas under pressure and including a feed nozzle (27) and a measurement member (5), and a measurement pressure sensor (7) connected to the measurement branch between the feed nozzle (27) and the measurement member (5), the device being characterized in that it includes an absolute pressure sensor (13) connected to the source (1) of gas under pressure and having an input connected to a reference electricity source (12) and an output connected to an input of a differential amplifier (11) having another input connected to the reference electricity source and an output connected to a power supply terminal of the measurement pressure sensor (7).

2. A device according to claim 1, characterized in that it further includes a reference branch connected to the source of gas under pressure and including a feed nozzle (26) and a calibrated leak (3), and in that the measurement pressure sensor (7) is a differential pressure sensor connected to the measurement branch and to the reference branch.

3. A pneumatic measurement device according to claim 1 or claim 2, characterized in that it includes an additional corrector circuit (15) disposed on a connection line (10) between the output of the differential amplifier (11) and the input of the measurement pressure sensor (7), said additional corrector circuit comprising a resistor (16) connected in series in the connection line (10) and a resistor (17) connected in parallel and associated with a setting voltage source (18).

4. A pneumatic measurement device according to any one of claims 1 to 3, characterized in that it includes a safety circuit comprising a switch (19) associated with a measurement pressure sensor (7) and controlled by a differential amplifier (20) having one input connected to the absolute pressure sensor (13) and having another input connected to a safety reference voltage (21).

## Patentansprüche

1. Vorrichtung zum Messen von Dimensionen auf pneumatischem Wege, umfassend eine Druckgasquelle (1), einen Meßabschnitt (4), der mit der Druckgasquelle verbunden ist und eine Kopfdüse (27) und ein Meßelement (5) enthält, und einen Meßdruckfühler (7), der mit dem Meßabschnitt zwischen der Kopfdüse (27) und dem Meßelement (5) verbunden ist, gekennzeichnet durch einen Absolutdruckfühler (13), der mit der Druckgasquelle (1) verbunden ist und einen mit einer elektrischen Referenzstromquelle (12) verbundenen Eingang und einen mit einem Eingang eines Differenzverstärkers (11) verbundenen Ausgang hat, wobei ein weiterer Eingang des Differenzverstärkers mit der elektrischen Referenzstromquelle und ein Ausgang mit einer Anschlußklemme des Meßdruckfühlers (7) verbunden ist.

2. Vorrichtung nach Anspruch 1, dadurch gekennzeichnet, daß diese ferner einen Referenzabschnitt enthält, der mit der Druckgasquelle verbunden ist und eine Kopfdüse (26) und eine kalibrierte Ausströmungsöffnung (3) umfaßt, und daß der Meßdruckfühler (7) ein mit dem Meßabschnitt und dem Referenzabschnitt verbundener Differenzdruckfühler ist.

3. Pneumatische Meßvorrichtung nach Anspruch 1 oder 2, gekennzeichnet durch eine komplementäre Korrekturschaltung (15), die an einer Verbindungsleitung (10) zwischen dem Ausgang des Differenzverstärkers (11) und dem Eingang des Meßdruckfühlers (7) angeordnet ist und einen an der Verbindungsleitung (10) angeordneten Widerstand (16) und einen parallel geschalteten Widerstand (17) umfaßt, der mit einer Sperrspannungsquelle (18) verbunden ist.

4. Pneumatische Meßvorrichtung nach einem der Ansprüche 1 bis 3, gekennzeichnet durch eine Sicherheitsschaltung, die einen Unterbrecher (19) aufweist, der mit dem Meßdruckfühler (7) verbunden ist und durch einen Differenzverstärker (20) gesteuert wird, der einen mit dem Absolutdruckfühler (13) verbundenen Eingang und einen mit einer Sicherheitsreferenzspannung (21) verbundenen Eingang hat.
